# EUROPEAN PATENT SPECIFICATION

(11) **EP 3 702 125 B1**
(45) Date of publication and mention of the grant of the patent: **21.06.2023**
(21) Application number: 20159818.2
(22) Date of filing: 27.02.2020
(51) Int. Cl.: B29C 48/50, B29C 48/56

(54) **RUBBER EXTRUDER AND METHOD FOR EXTRUDING RUBBER**
KAUTSCHUKEXTRUDER UND VERFAHREN ZUM EXTRUDIEREN VON KAUTSCHUK
EXTRUDEUSE DE CAOUTCHOUC ET PROCÉDÉ D'EXTRUSION DE CAOUTCHOUC

(30) Priority: 01.03.2019 JP 2019037939; 01.03.2019 JP 2019037940; 01.03.2019 JP 2019037941
(43) Date of publication of application: 02.09.2020
(73) Proprietor: Sumitomo Rubber Industries, Ltd., Kobe-shi, Hyogo-ken 651-0072 (JP)
(72) Inventor: KOJIMA, Ryoji, Kobe-shi, Hyogo 651-0072 (JP); KAWAMURA, Takanobu, Kobe-shi, Hyogo 651-0072 (JP); HONDA, Shinichiro, Kobe-shi, Hyogo 651-0072 (JP)
(74) Representative: Manitz Finsterwald Patent- und Rechtsanwaltspartnerschaft mbB

(56) References cited:
- EP-A1- 0 490 359
- EP-A1- 3 409 441
- WO-A1-2018/114702
- JP-A- S60 172 515
- US-A- 4 007 545
- Rauwendaal Chris: "single screw extruders, excerpts" In: "single screw extruders, excerpts", 1 January 2014 (2014-01-01), XP055868944, ISBN: 978-1-56990-516-6 pages 15-571,

## Description

### [Technical Field]

The present invention relates to a rubber extruder for extruding unvulcanized rubber and a method for extruding unvulcanized rubber.

### [Background Art]

Conventionally, rubber extruders which include barrels and screws arranged in the barrels have been known. For example, the following Patent document 1 discloses a rubber component manufacturing device which includes a damming section provided halfway through a screw to prevent degradation of a low exothermic rubber component.

### [Citation List]

### [Patent Literature]

[Patent document 1] Japanese Unexamined Patent Application Publication 2015-013414 A rubber extruder in accordance with the preamble of claim 1 is known from documents US 4 007 545 A (which discloses the preamble of claim 1) and WO 2018/1 14702 A1. Related rubber extruders are known from documents EP 0 490 359 A1 and EP 3 409 441 A1.

### [Summary of Invention]

### [Technical Problem]

Unfortunately, when high viscosity unvulcanized rubber is extruded using the rubber component manufacturing device as disclosed in Patent document 1, productivity tends to be lowered. Thus, there is room for further improvement.

The present invention has been made in view of the above circumstances, and has a major object to provide a rubber extruder capable of improving quality and productivity of high viscosity unvulcanized rubber.

### [Solution to Problem]

In one aspect of the first invention, a rubber extruder includes a barrel, a feeding portion for feeding unvulcanized rubber to the interior of the barrel, and a screw for extruding the unvulcanized rubber fed in the interior of the barrel toward an extruding direction, the screw having at least one helically extending flight to define at least one helically extending channel; wherein
the interior of the barrel includes a dividing section for dividing the unvulcanized rubber, a kneading section for kneading the divided unvulcanized rubber locally, and a compression section for compressing the kneaded unvulcanized rubber toward the extruding direction, wherein the compression section is configured such that the screw therein has a volume of the channel decreasing gradually toward the extruding direction of the unvulcanized rubber, the feeding portion includes a feeder for helping to supply the screw with the unvulcanized rubber and the feeder includes a low flight height portion of the screw having a flight height smaller than that of another portion of the screw.

In one embodiment of the first invention, it is preferable that a length of the compression section in an axial direction of the barrel is longer than a length of the dividing section in the axial direction.

In another embodiment of the first invention, it is preferable that in the dividing section, the barrel is provided with one or more sets of plurality of pins.

In another embodiment of the first invention, it is preferable that three or more sets of plurality of pins are arranged in the axil direction of the barrel, and that with respect to arrangement pitches in the axial direction of the sets of plurality of pins, a pitch on the kneading section side is smaller than a pitch on the feeding portion side.

In another embodiment of the first invention, it is preferable that the feeding portion includes a hopper provided on the barrel, and the feeder includes a gear mechanism disposed in the hopper.

In another embodiment of the first invention, it is preferable that the feeder includes a wide flight pitch portion of the screw having a flight pitch greater than that of another portion of the screw.

In any preceding embodiments of the first invention, it is preferable that the compression section is configured such that a depth of the channel of the screw decreases gradually toward the extruding direction.

In any preceding embodiments of the first invention, it is preferable that the compression section is configured such that a flight pitch of the screw in the axial direction decreases gradually toward the extruding direction.

In any preceding embodiments of the first invention, it is preferable that the screw in the kneading section further including a barrier flight extending from a portion of the flight to another portion of the flight.

In any preceding embodiments of the first invention, it is preferable that the screw in the kneading section further including a cylindrical dam portion arranged coaxially with the screw.

In one aspect of the second invention, a method for extruding rubber, the method includes a feeding step for feeding an interior of a barrel of a rubber extruder with unvulcanized rubber, and an extruding step for extruding the unvulcanized rubber fed in the barrel toward an extruding direction using a screw which includes at least one helically extending flight to define at least one helically extending channel; characterized in that
the extruding step includes a dividing step for dividing the unvulcanized rubber, a kneading step for kneading the divided unvulcanized rubber locally, and a compressing step for compressing the kneaded unvulcanized rubber toward the extruding direction, wherein the compressing step compresses the unvulcanized rubber using the screw configured such that the screw has a volume of the channel decreasing gradually toward the extruding direction, wherein the feeding step feeds the unvulcanized rubber using a feeder of the rubber extruder, wherein the feeder comprises a low flight height portion of the screw having a flight height smaller than that of another portion of the screw.

In one embodiment of the second invention, it is preferable that the dividing step divides the unvulcanized rubber using one or more sets of plurality of pins provided on the interior of the barrel.

### [Advantageous Effects of Invention]

The rubber extruder according to the present invention includes a barrel, a feeding portion for feeding unvulcanized rubber to the interior of the barrel, and a screw for extruding the unvulcanized rubber fed in the interior of the barrel toward an extruding direction, the screw having at least one helically extending flight to define at least one helically extending channel, characterized in that the interior of the barrel comprises a dividing section for dividing the unvulcanized rubber, a kneading section for kneading the divided unvulcanized rubber least locally, and a compression section for compressing the kneaded unvulcanized rubber toward the extruding direction.

In the rubber extruder configured as such, the dividing section improves fluidity of unvulcanized rubber to promote heating and plasticization of the unvulcanized rubber, improving productivity of extrusion process. In addition, the kneading section of the rubber extruder can knead unvulcanized rubber uniformly even when an amount of unvulcanized rubber fed into the extruder varies. Further, the compression section of the rubber extruder makes it possible to merge the divided unvulcanized rubber without increasing residual stress thereof. Thus, the rubber extruder can extrude kneaded unvulcanized rubber uniformly into the required shape stably.

In the rubber extruder according to one aspect of the present invention, the compression section is configured such that the screw therein has a channel volume of the flight decreasing gradually toward the extruding direction of unvulcanized rubber. The compression section configured as such makes it possible to merge the divided unvulcanized rubber without increasing residual stress thereof, improving quality of unvulcanized rubber to be extruded.

In the rubber extruder according to another aspect of the present invention, the dividing section includes one or more sets of plurality of pins provided in the barrel. The dividing section as such, for example, enables to adjust a protruding amount of the pins easily according to viscosity of unvulcanized rubber, improving productivity of extrusion process.

In the rubber extruder according to another aspect of the present invention, the feeding portion comprises a feeder for helping to supply the screw with unvulcanized rubber. The feeding portion as such enables to surely feed a continuous band shaped unvulcanized rubber into the barrel, reducing production loss due to miss feeding of unvulcanized rubber.

Thus, the rubber extruder according to the present invention can improve quality and productivity of high viscosity unvulcanized rubber.

The method for extruding rubber according to the present invention includes a feeding step for feeding an interior of a barrel of a rubber extruder with unvulcanized rubber, and an extruding step for extruding the unvulcanized rubber fed in the barrel toward an extruding direction using a screw having a flight, characterized in that the extruding step includes a dividing step for dividing the unvulcanized rubber, a kneading step for kneading the divided unvulcanized rubber locally, and a compressing step for compressing the kneaded unvulcanized rubber toward the extruding direction.

In the method for extruding rubber as such, the dividing step improves fluidity of unvulcanized rubber to promote heating and plasticization of the unvulcanized rubber, improving productivity of extrusion process. In addition, the kneading step of the method for extruding rubber can knead unvulcanized rubber uniformly even when an amount of unvulcanized rubber fed into the extruder varies. Further, the compressing step of the rubber extruder makes it possible to merge the divided unvulcanized rubber without increasing residual stress thereof. Thus, the method for extruding rubber can extrude kneaded unvulcanized rubber uniformly into the required shape stably.

In the method for extruding rubber according to one aspect of the present invention, the compressing step compresses the unvulcanized rubber using the screw configured such that the screw has a volume of the channel decreasing gradually toward the extruding direction of unvulcanized rubber. The compressing step as such makes it possible to merge the divided unvulcanized rubber without increasing residual stress thereof, improving quality of unvulcanized rubber to be extruded.

In the method for extruding rubber according to another aspect of the present invention, the dividing step divides the unvulcanized rubber using one or more sets of plurality of pins provided on the interior of the barrel. In the dividing step as such, it enables to adjust a protruding amount of the pins easily according to viscosity of unvulcanized rubber, improving productivity of extrusion process.

In the method for extruding rubber according to another aspect of the present invention, the feeding step feeds the unvulcanized rubber using a feeder of the rubber extruder. The feeding step as such enables to surely feed a continuous band shaped unvulcanized rubber into the barrel, reducing production loss due to miss feeding of unvulcanized rubber.

Thus, the method for extruding rubber according to the present invention can improve quality and productivity of high viscosity unvulcanized rubber.

### [Brief Description of Drawings]

FIG. 1 is a cross-sectional view of a rubber extruder according to one embodiment, which is not claimed but useful for understanding the invention.
FIG. 2 is a flowchart for explaining an embodiment of a method for extruding rubber according to one embodiment.
FIG. 3 is a flowchart of an extruding step.
FIG. 4 is a cross-sectional view of the rubber extruder according to the second embodiment, which is not claimed but useful for understanding the invention.
FIG. 5 is a cross-sectional view of the rubber extruder according to the third embodiment, which is according to the present invention.
FIG. 6 is a cross-sectional view of the rubber extruder according to the fourth embodiment, which is according to the present invention.
FIG. 7 is a cross-sectional view of the rubber extruder according to the fifth embodiment, which is not claimed but useful for understanding the invention.
FIG. 8 is a cross-sectional view of the rubber extruder according to the sixth embodiment, which is according to the present invention.

### [Description of Embodiments]

One or more embodiments of the present invention will be explained below with reference to the accompanying drawings.

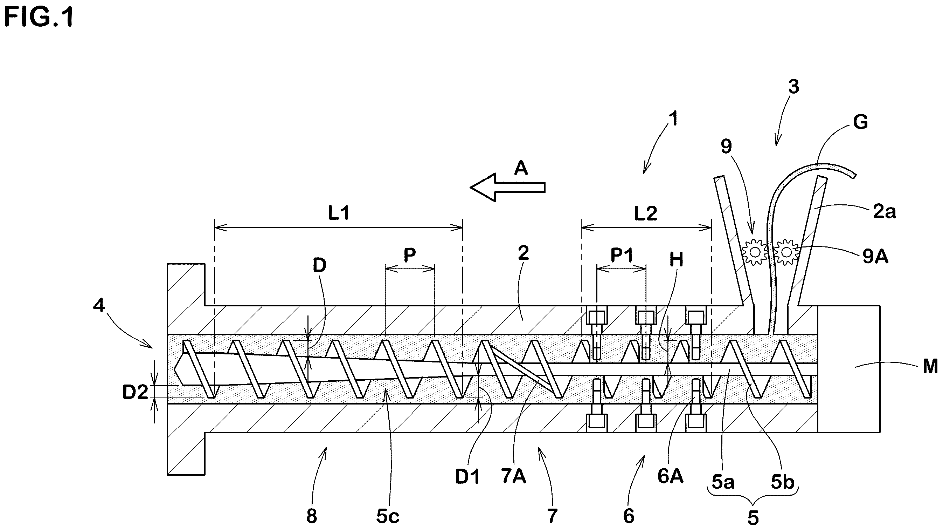

FIG. 1 is a cross-sectional view of a rubber extruder 1 according to one non-claimed embodiment (first embodiment). As illustrated in FIG. 1, the rubber extruder 1 according to the present embodiment includes a barrel 2, a feeding portion 3 for feeding unvulcanized rubber G to the interior of the barrel 2, and a discharging portion 4 for discharging unvulcanized rubber G in the barrel 2. The rubber extruder 1 further includes a screw 5 for extruding the unvulcanized rubber G fed in the interior of the barrel 2 toward an extruding direction A which is a direction toward the discharging portion 4 from the feeding portion 3.

The interior of the barrel 2 according to the present embodiment includes a dividing section 6 for dividing the unvulcanized rubber G, a kneading section 7 for kneading the divided unvulcanized rubber G locally, and a compression section 8 for compressing the kneaded unvulcanized rubber G toward the extruding direction A.

As used herein "dividing unvulcanized rubber G" shall mean subdividing, at least partially, a continuous band shaped unvulcanized rubber G fed in the barrel 2. In addition, as used herein, "kneading divided unvulcanized rubber G locally" shall mean, by making unvulcanized rubber G pass through a localized narrow space, kneading the unvulcanized rubber G stronger than kneading between the barrel 2 and the screw 5.

The compression section 8, for example, enables to compress unvulcanized rubber G such that pressure of the unvulcanized rubber G increases gently in a linear functional way. The compression section 8, for example, may increase pressure of the unvulcanized rubber G in two or more stages like a step manner, or increase in a quadratic functional way. As described above, the compression section 8 preferably compress unvulcanized rubber G gradually toward the extruding direction A. The compression section 8, for example, can compress unvulcanized rubber G such that a rate of increase of pressure of the unvulcanized rubber G per unit time is equal to or less than 0.1 MPa/s.

In the rubber extruder 1, the dividing section 6 improves fluidity of unvulcanized rubber G to promote heating and plasticization of the unvulcanized rubber, improving productivity of extrusion process. In addition, the kneading section 7 of the rubber extruder 1 can knead unvulcanized rubber G uniformly even when an amount of unvulcanized rubber G fed into the extruder 1 varies. Further, the compression section 8 of the rubber extruder 1 makes it possible to merge the divided unvulcanized rubber G without increasing residual stress thereof. Thus, the rubber extruder 1 can extrude unvulcanized rubber kneaded uniformly into the required shape stably.

In some preferred aspects, unvulcanized rubber G fed into the extruder 1 is high viscosity unvulcanized rubber G having Mooney viscosity ML (1+4) 100 degrees C. of equal to or greater than 90. The unvulcanized rubber G preferably includes a rubber component, silica, and silane coupling agent, at least. Such unvulcanized rubber G, after being vulcanized, can suppress generating heat due to deformation, thus improving fuel efficiency of vehicles when used as vehicle tyres.

As the rubber component, it is not particularly limited but, for example, can be employed diene rubber, butyl rubber (IIR), natural rubber (NR), and the like. As the diene rubber, for example, styrene- butadiene rubber (SBR), butadiene rubber (BR), isoprene rubber (IP), ethylene-propylene-diene rubber (EPDM), chloroprene rubber (CR), acrylonitrile-butadiene rubber (NBR), and the like may be employed. Styrene-butadiene rubber (SBR), for example, includes terminal-modified S-SBR, main-chain-modified S-SBR, hydrogenated SBR, as well as multi-component copolymers composed of styrene-butadiene and non-conjugated olefins. The rubber component can include only a single kind, or two or more kinds which are to be mixed.

As silica, it is not particularly limited, but can be employed, for example, common one in this technical field. As the silica, for example, anhydrous silica obtained by a dry process, hydrated silica obtained by wet method and the like may be employed.

As the silane coupling agent, it is not particularly limited, but can be employed, for example, sulfide-based, mercapto-based, vinyl-based, amino-based, glycidoxy-based, nitro-based, and chloro-based silane coupling agents. The silane coupling agent can include only a single kind, or two or more kinds which are to be mixed.

The unvulcanized rubber G may further include carbon black, filler and the like, for example, in addition to rubber component, silica and silane coupling agent.

As the carbon black, it is not particularly limited, but can be employed, for example, a conventional carbon black to be mixed into unvulcanized rubber. As the carbon black, for example, common one in this technical field such as SAF, ISAF, HAF, FEF, GPF and the like can be employed. The carbon black can include only a single kind, or two or more kinds which are to be mixed.

The filler is not particularly limited, but may include any of an organic filler and an inorganic filler. As the filler, for example, calcium carbonate, mica, aluminum hydroxide, magnesium hydroxide, magnesium oxide, clay, talc, titanium oxide, carbon fiber, cellulose fiber, carbon nanotube (multi-layer, single-layer), graphene and the like can be employed.

The unvulcanized rubber G, for example, may further include compounding agent which is common one in this technical fields in addition to the above components. As the compounding agent, zinc oxide, thermoplastic polyurethane, stearic acid, antioxidants, oils and waxes can be used, for example.

Preferably, the barrel 2 is configured as a hollow cylindrical shape which is coaxial with the screw 5. The barrel 2, for example, is provided on axially one side with the feeding portion 3 and on axially other side with the discharging portion 4. The barrel 2 according to the present embodiment is adjusted to a desired temperature equal to or less than 120 degrees C. Such a barrel 2 can prevent generating residual stress in unvulcanized rubber G, enabling to improve quality of the unvulcanized rubber G

The feeding portion 3, for example, includes a hopper 2a provided on the barrel 2. It is preferable that the feeding portion 3 includes a feeder 9 for helping to supply the screw 5 with the unvulcanized rubber G The feeding portion 3 as such enables to surely force a continuous band shaped unvulcanized rubber G into the barrel 2 (e.g., engaging the unvulcanized rubber G with the screw 5), reducing production loss due to miss feeding of unvulcanized rubber G

The feeder 9, for example, includes a gear mechanism 9A disposed in the hopper 2a. The gear mechanism 9A includes a pair of gears which is rotated in synchrony by a driving source (not illustrated). The gear mechanism 9A, for example, may be disposed near the barrel 2. Alternatively, two gear mechanisms 9A may be disposed. The feeder 9 can feed unvulcanized rubber G into the screw 5 even when the initial stage of supply of unvulcanized rubber G and even when supplying unvulcanized rubber G is interrupted, enabling to force a band shaped unvulcanized rubber G into the barrel 2.

The discharging portion 4 is not particularly limited, but may use a general one in this technical field. For example, a gear pump and/or a discharging head having a die (not illustrated) may be coupled to the discharging portion 4.

The screw 5 preferably includes a screw shaft 5a and at least one helically extending flight 5b around the screw shaft 5a to define at least one helically extending channel 5c around the screw shaft 5a. In the present embodiment, the helical flight pitch P is constant or substantially constant in a whole region of the length of screw 5. The screw 5, for example, is turned at rotational velocity which is changeable freely by a driving member M arranged on the feeding portion 3 side. Such a screw 5 can be adjusted in rotational velocity according to viscosity of unvulcanized rubber G, maintaining better quality of unvulcanized rubber G to be extruded.

In the present embodiment, the barrel 2 in the dividing section 6 is provided with one or more sets of plurality of pins 6A. The dividing section 6 configured as such enables to adjust a protruding amount of the pins 6A easily based on viscosity of unvulcanized rubber G improving productivity of extrusion process.

For example, at least two sets, three sets in the present embodiment, of plurality of pins 6A are arranged in the axial direction of the barrel 2. In the present embodiment, the arrangement pitch P1 in the axial direction of the sets of plurality of pins 6A is constant or substantially constant. In each set of the pins 6A, at least two, preferably three or more pins 6A are arranged in the circumferential direction of the barrel 2 (not illustrated). The arrangement pitch of the pins 6A in the circumferential direction of the barrel 2 is constant or substantially constant. A plurality of pins 6A, for example, may be arranged in a helical manner on the barrel 2.

Each pin 6A, for example, is provided such that a protruding amount is adjustable from an inner surface of the barrel 2. The flight 5b of the screw 5 is provided with partial cutouts or low height flight portions at locations corresponding to the pins 6A so that the screw 5 is not interfered with pins 6A even when the protruding amounts of pins 6A are adjusted to maximum value. As used herein, a height H of the flight 5b is a half-length of the difference between outer diameters of the flight 5b and the screw shaft 5a at a respective location. That is, a height H of the flight 5b is a radial distance from a radially outer surface of the screw shaft 5a to a radially outer surface of the flight 5b.

The screw 5 in the kneading section 7, for example, further includes at least one, one in the present embodiment, barrier flight 7A extending from a portion of the flight 5b to another portion of the flight 5b. The barrier flight 7A, for example, may be provided two or more in the axial direction or in the circumferential direction.

In the present embodiment, the barrier flight 7A is provided such that the barrier flight 7A is inclined at an angle with respect to the axial direction of the screw 5. Alternatively, the barrier flight 7A, for example, may be provided so as to extend parallel with the axial direction of the screw 5. The barrier flight 7A can provide a localized narrow space between the barrier flight 7A and an inner surface of the barrel 2, which can knead the unvulcanized rubber G strongly locally without reducing extruded amount of unvulcanized rubber G

In the present embodiment, the compression section 8 is configured such that the screw 5 therein has a volume of the channel 5c decreasing gradually toward the extruding direction A of the unvulcanized rubber G Two or more compression sections 8, for example, may be provided through one or more sections whose volume of the channel 5c is constant. The compression section 8 makes it possible to merge the divided unvulcanized rubber G without increasing residual stress thereof, improving quality of unvulcanized rubber G to be extruded. Note that a section in which volume of the channel 5c of the screw 5 is constant may be provided downstream the compression section 8 in the extruding direction A.

In the compression section 8, for example, a depth D of the channel 5c of the screw 5 decreases gradually toward the extruding direction A of the unvulcanized rubber G As used herein, a depth D of the channel 5c is a half-length of the difference between a maximum outer diameter of the flight 5b and an outer diameter of the screw shaft 5a at a respective location. That is, a depth D of the channel 5c is a radial distance from an outer surface of the screw shaft 5a to the maximum radial location of the flight 5b of a respective location.

The compression section 8 preferably has a ratio (D2-D1)/L1 of from 1% to 5%, where "D1" represents a depth of the channel 5c at a starting position of the compression section 8, "D2" represents a depth of the channel at an ending position of the compression section 8, and "L1" represents an axial distance of the compression section 8. The compression section 8 configured as such can make a rate of increase of pressure of the unvulcanized rubber G per unit time small. Thus, even when an amount of extrusion of unvulcanized rubber G increases, unvulcanized rubber G can be merged without increasing residual stress of the unvulcanized rubber G.

It is preferable that an axial length L1 of the compression section 8 is greater than an axial length L2 of the dividing section 6. Preferably, the axial length L1 of the compression section 8 is 10% or more the axial length of the screw 5. The compression section 8 configured as such can make a rate of increase of pressure of the unvulcanized rubber G per unit time small. Thus, even when an amount of extrusion of unvulcanized rubber G increases, unvulcanized rubber G can be merged without increasing residual stress of the unvulcanized rubber G.

In the present invention, the kneading section 7 as well as the compression section 8 is not provided with any pins 6A. Thus, the kneading section 7 as well as the compression section 8 do not divide the unvulcanized rubber G, helping to improve quality of the unvulcanized rubber G to be kneaded.

Next, referring to FIG. 1, a method for extruding rubber according to the present embodiment, using the rubber extruder 1, will be explained.

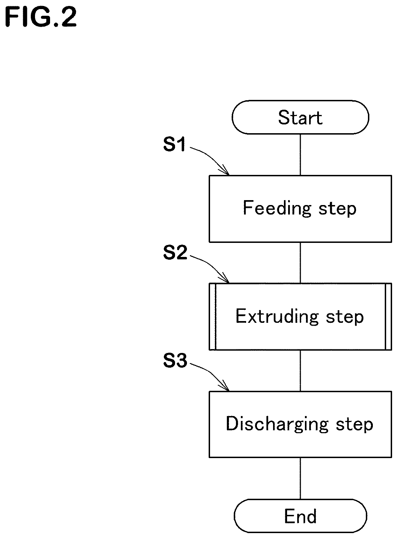

FIG. 2 is a flowchart for explaining an embodiment of a method for extruding rubber according to the present embodiment. As illustrated in FIG. 2, in the method according to the present embodiment, a feeding step S 1 for feeding an interior of the barrel 2 of the rubber extruder 1 with unvulcanized rubber G is conducted. In the feeding step S 1, the feeder 9 which is provided on the feeding portion 3 of the rubber extruder 1 preferably feeds the unvulcanized rubber G into the barrel 2. The feeding step S 1 enables to surely feed a continuous band shaped unvulcanized rubber G into the barrel 2, reducing production loss due to miss feeding of unvulcanized rubber.

In the feeding step S 1, for example, the gear mechanism 9A provided on the hopper 2a of the rubber extruder 1 feeds unvulcanized rubber G into the barrel 2. Thus, even when the initial stage of supply of unvulcanized rubber G and even when supplying unvulcanized rubber G is interrupted, enabling to force a band shaped unvulcanized rubber G into the barrel 2.

In the method according to the present embodiment, after the feeding step S 1, an extruding step S2 for kneading and extruding the unvulcanized rubber G fed in the barrel 2 toward the extruding direction A using the screw 5 is conducted. The details of the extruding step S2 will be explained later. In the method for extruding rubber, after the extruding step S2, a discharging step S3 is preferably conducted. As the discharging step S3, a general manner in this technical field may be employed, thus omitting the detailed explanation thereof.

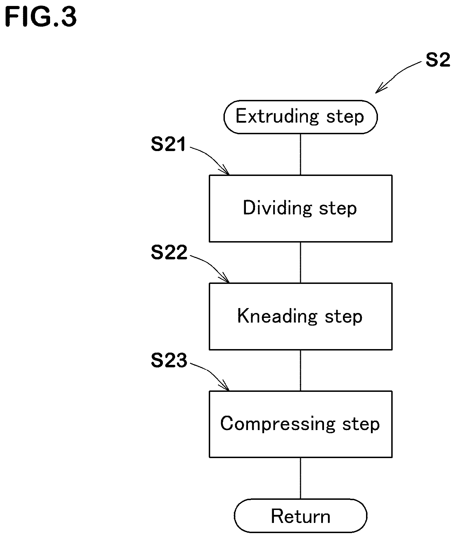

FIG. 3 is a flowchart of the extruding step S2. As illustrated in FIG. 3. in the extruding step S2 according to the present embodiment, a dividing step S21 for dividing the unvulcanized rubber G is conducted. The dividing step S21 can improve fluidity of the unvulcanized rubber G to promote heating and plasticization of the unvulcanized rubber G improving productivity of extrusion process.

In the dividing step S21, unvulcanized rubber G is divided by the sets of plurality of pins 6A provided on an inner surface of the barrel 2. In the dividing step S21, since a protruding amount of the pins 6A may be adjusted easily based on viscosity of unvulcanized rubber G to be extruded, productivity of extrusion process of the unvulcanized rubber G can be improved.

In the extruding step S2 according to the present embodiment, after the dividing step S21, a kneading step S22 for kneading the divided unvulcanized rubber G locally is conducted. The kneading step S22 as such can knead unvulcanized rubber G uniformly even when an amount of unvulcanized rubber G fed into the extruder 1 varies.

In the kneading step S22, for example, the unvulcanized rubber G is kneaded by the barrier flight 7A which extends in the channel 5c so as to straddle between two different locations of the flight 5b. The kneading step S22 can make unvulcanized rubber G pass through a localized narrow space between the barrier flight 7A and an inner surface of the barrel 2, kneading the unvulcanized rubber G stronger without reducing extruded amount of unvulcanized rubber G

In the extruding step S2 according to the present embodiment, after the kneading step S22, a compressing step S23 for compressing the kneaded unvulcanized rubber G toward the extruding direction A of the unvulcanized rubber G is conducted. It is preferable that the compressing step S23 compresses the unvulcanized rubber G using the screw 5 which is configured such that the screw 5 having a volume of the channel 5c decreasing gradually toward the extruding direction A of the unvulcanized rubber G The compressing step S23 as such makes it possible to merge the divided unvulcanized rubber G without increasing residual stress thereof, improving quality of unvulcanized rubber G to be extruded. Thus, the rubber extruder 1 can extrude unvulcanized rubber G kneaded uniformly into the required shape stably.

In the compressing step S23, for example, the unvulcanized rubber G is compressed using the screw 5 having a depth D of the channel 5c decreasing gradually toward the extruding direction A of the unvulcanized rubber G The compressing step S23 can make a rate of increase of pressure of the unvulcanized rubber G per unit time small. Thus, the compressing step S23 can compress the unvulcanized rubber G without increasing residual stress of the unvulcanized rubber G

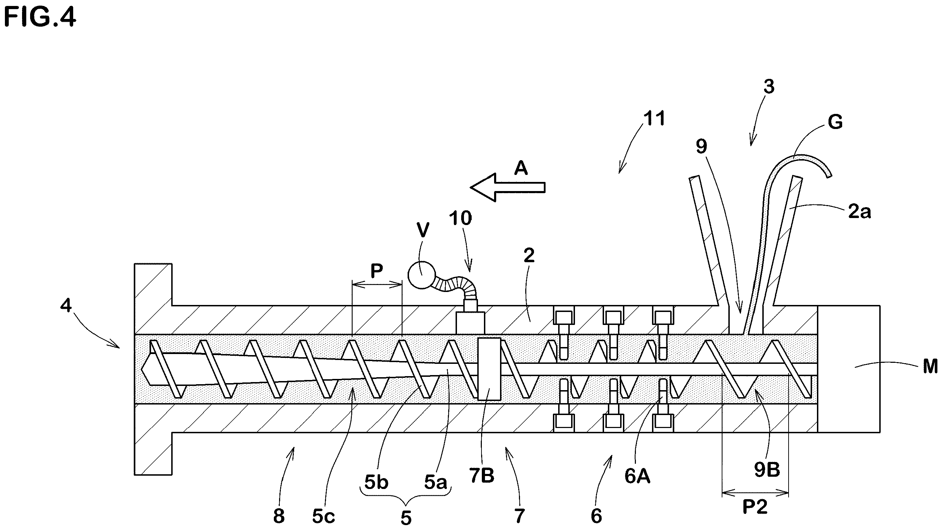

FIG. 4 is a cross-sectional view of the rubber extruder 11 according to the second embodiment, which is not claimed. Note that the same or common elements as the above embodiment are denoted the same references and omitted the detail explanation thereof. As illustrated in FIG. 4, the rubber extruder 11 according to the second embodiment, the same as the above-mentioned the rubber extruder 1, includes the barrel 2, the feeding portion 3, the discharging portion 4, and the screw 5. In addition, the interior of the barrel 2 is preferably provided with the dividing section 6, the kneading section 7, and the compression section 8.

In the second embodiment, the feeder provided on the feeding portion 3 includes a wide flight pitch portion 9B of the screw 5 having a flight pitch greater than that of another portion of the screw 5, for example. The flight pitch P2 of the wide flight pitch portion 9B is preferably in a range of from 110% to 150% of a flight pitch P of other than the wide flight pitch portion 9B. Such a feeder 9 can feed unvulcanized rubber G into the channel 5c of the screw 5 even when the initial stage of supply of unvulcanized rubber G and even when supplying unvulcanized rubber G is interrupted. Thus, the feeder 9 can force a band shaped unvulcanized rubber G into the barrel 2 surely.

In the second embodiment, the screw 5 in the kneading section 7, for example, includes a cylindrical dam portion 7B arranged coaxially with the screw 5. In such a kneading section 7, unvulcanized rubber G which passes through a narrow region between the dam portion 7B and an inner surface of the barrel 2 can be kneaded strongly locally. The dam portion 7B, for example, may be provided a plurality of small through holes extending in the axial direction (not illustrated).

On the downstream side of the dam portion 7B in the extruding direction A, it is preferable that a vent portion 10 for sucking gases in the barrel 2 is provided. The vent portion 10, for example, includes a vacuum pump V The vent portion 10 can suck an air and volatile components included in the unvulcanized rubber G in the downstream side of the dam portion 7B in the extruding direction A, improving quality of the unvulcanized rubber G

In the second embodiment, the method for extruding unvulcanized rubber using the rubber extruder 11 is the same manner of the flowcharts as shown in FIG. 2 and FIG. 3. That is, the method for extruding rubber according to the second embodiment includes the feeding step S1, the extruding step S2 and the discharging step S3. Preferably, the extruding step S2 includes the dividing step S21, the kneading step S22, and the compressing step S23.

The feeding step S1 according to the second embodiment, for example, is conducted such that the unvulcanized rubber G is fed into the barrel using the wide flight pitch portion 9B of the screw 5 having a flight pitch P2 greater than that of another portion of the screw 5. Such a feeding step S1 can feed unvulcanized rubber G into the channel 5c of the screw 5 surely even when the initial stage of supply of unvulcanized rubber G and even when supplying unvulcanized rubber G is interrupted, enabling to force a band shaped unvulcanized rubber G into the barrel 2.

The kneading step S22 according to the second embodiment, for example, kneads the unvulcanized rubber G using the cylindrical dam portion 7B arranged coaxially with the screw 5. In such a kneading step S22, the unvulcanized rubber G which passes through a narrow region between the dam portion 7B and an inner surface of the barrel 2 can be sheared strongly locally.

In the extruding step S2 according to the second embodiment, a sucking step for sucking an air and volatile components included in the unvulcanized rubber G may be conducted after the kneading step S22. Such an extruding step S2 can improve quality of the unvulcanized rubber G further.

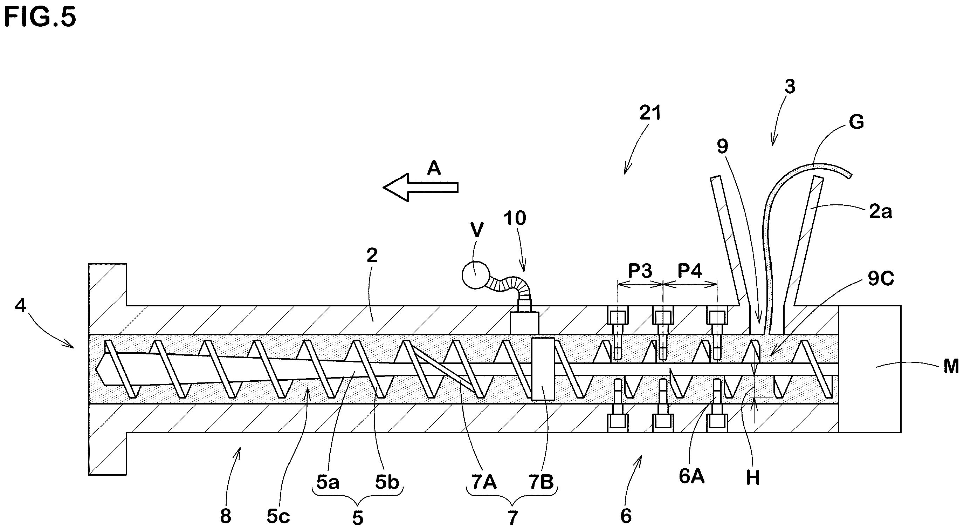

FIG. 5 illustrates a cross-sectional view of the rubber extruder 21 according to the third embodiment, which is according to the present invention. Note that the same or common elements as the above embodiment are denoted the same references and omitted the detail explanation thereof. As illustrated in FIG. 5, the rubber extruder 21 according to the third embodiment, the same as the above-mentioned rubber extruders 1 and 11, includes the barrel 2, the feeding portion 3, the discharging portion 4, and the screw 5. In addition, the interior of the barrel 2 is preferably provided with the dividing section 6, the kneading section 7, and the compression section 8.

The feeder 9 of the feeding portion 3 according to the third embodiment, for example, includes the low flight height portion 9C of the screw 5 having a flight height H smaller than that of another portion of the screw 5. The low flight height portion 9C, for example, may be configured as a portion where the flight 5b lacks partially. Such a feeder 9 can feed unvulcanized rubber G into the low flight height portion 9C even when the initial stage of supply of unvulcanized rubber G and even when supplying unvulcanized rubber G is interrupted, enabling to force a band shaped unvulcanized rubber G into the barrel 2.

The dividing section 6 according to the third embodiment, the same as the above-mentioned dividing section 6, includes one or more sets of a plurality of pins 6A provided on the barrel 2. In the third embodiment, at least three sets of a plurality of pins 6A are arranged in the axial direction of the barrel 2. With respect to arrangement pitches in the axial direction of the sets of plurality of pins 6A, a pitch P3 of the kneading section 7 side is preferably smaller than a pitch P4 of the feeding portion 3 side. Such a dividing section 6 can divide the unvulcanized rubber G more finely in the downstream side in the extruding direction A, improving fluidity of the unvulcanized rubber G

The kneading section 7 according to the third embodiment, for example, includes the dam portion 7B and the barrier flight 7A. The barrier flight 7A is preferably arranged downstream the dam portion 7B in the extruding direction A. Such a kneading section 7 can knead the unvulcanized rubber G through the dam portion 7B as well as through the barrier flight 7A, thus kneading unvulcanized rubber G strongly.

In the third embodiment, it is preferable that the vent portion 10 for sucking gasses in the barrel 2 is arranged between the dam portion 7B and the barrier flight 7A. The vent portion 10 configured as such can suck an air and volatile components included in the unvulcanized rubber G between the dam portion 7B and the barrier flight 7A effectively.

The method for extruding unvulcanized rubber using the rubber extruder 21 according to the third embodiment is the same as the flowcharts as shown in FIG. 2 and FIG. 3. That is, the method for extruding rubber according to this embodiment includes the feeding step S1, the extruding step S2, and the discharging step S3. Preferably, the extruding step S2 further includes the dividing step S21, the kneading step S22, and the compressing step S23.

The feeding step S1 according to the third embodiment, for example, feeds the unvulcanized rubber G using the low flight height portion 9C of the screw 5 having a flight height H smaller than that of another portion of the screw 5. Such a feeding step S1 can feed unvulcanized rubber G into the low flight height portion 9C even when the initial stage of supply of unvulcanized rubber G and even when supplying unvulcanized rubber G is interrupted, enabling to force a band shaped unvulcanized rubber G into the barrel 2.

The dividing step S21 according to this embodiment, for example, divides the unvulcanized rubber G using the sets of a plurality of pins 6A in which the pitch P3 on the kneading section 7 side is smaller than the pitch P4 on the feeding portion 3 side. Such a dividing step S21 can divide the unvulcanized rubber G more finely in the downstream side in the extruding direction A, improving productivity of extruding process.

The kneading step S22 according to this embodiment, for example, kneads the unvulcanized rubber G using the dam portion 7B and the barrier flight 7A provided on the screw 5. In the kneading step S22 according to this embodiment, an air and volatile components included in the unvulcanized rubber G are preferably sucked out. Such a kneading step S22 can knead the unvulcanized rubber G strongly, improving quality of the unvulcanized rubber G to be extruded.

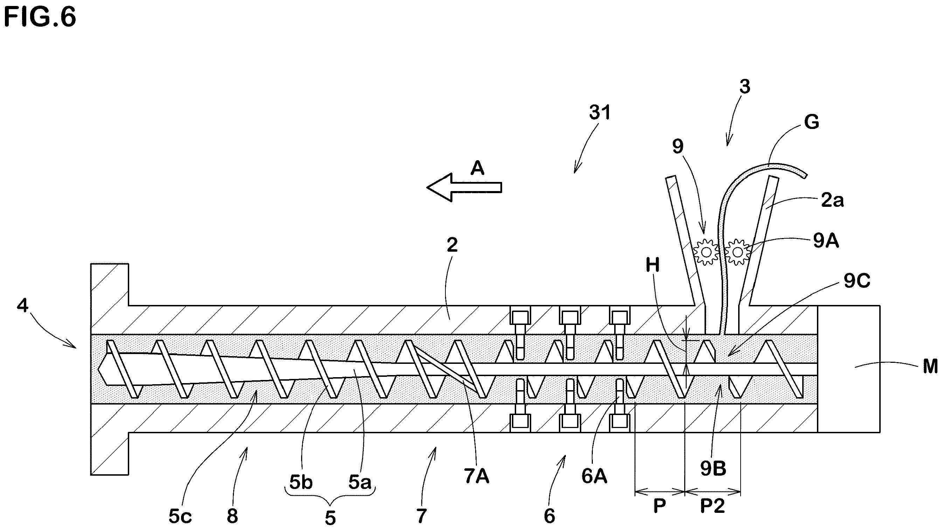

FIG. 6 illustrates a cross-sectional view of the rubber extruder 31 according to the fourth embodiment, which is according to the present invention. Note that the same or common elements as the above embodiment are denoted the same references and omitted the detail explanation thereof. As illustrated in FIG. 6, the rubber extruder 31 according to the fourth embodiment, the same as the above-mentioned rubber extruder 1 and the like, includes the barrel 2, the feeding portion 3, the discharging portion 4, and the screw 5. In addition, the interior of the barrel 2 is preferably provided with the dividing section 6, the kneading section 7, and the compression section 8.

The feeder 9 according to the this embodiment, for example, includes the gear mechanism 9A provided in the hopper 2a, the wide flight pitch portion 9B of the screw 5 having a flight pitch P greater than that of another portion of the screw 5, and the low flight height portion 9C of the screw 5 having a flight height H smaller than that of another portion of the screw 5. Alternatively, the feeder 9, for example, may include two means selected from the group of the gear mechanism 9A, the wide flight pitch portion 9B, and the low flight height portion 9C. Such a feeder 9 can feed unvulcanized rubber G into the barrel 2 surely by interaction between the combination of multiple means even if the unvulcanized rubber G had high viscosity.

The dividing section 6 according to this embodiment includes the sets of pins 6A which are arranged in the extruding direction at the same arrangement pitch or the substantially same pitch with one another as an example. Alternatively, the dividing section 6, for example, may include the sets of pins 6A which are arranged in different pitch from one another. Further, the kneading section 7 according to this embodiment includes the barrier flight 7A, but the kneading section 7, for example, may include the dam portion 7B in addition to or instead the barrier flight 7A.

The method for extruding unvulcanized rubber using the rubber extruder 31 according to the fourth embodiment is the same as the flowcharts as shown in FIG. 2 and FIG. 3. That is, the method for extruding rubber according to this embodiment includes the feeding step S1, the extruding step S2, and the discharging step S3. The extruding step S2 preferably includes the dividing step S21, the kneading step S22, and the compressing step S23.

The feeding step S1 according to this embodiment, for example, feeds the unvulcanized rubber G using the gear mechanism 9A of the rubber extruder 1, the wide flight pitch portion 9B, and the low flight height portion 9C. Such a feeding step S1 can feed unvulcanized rubber G into the barrel 2 surely by interaction between the combination of multiple means even if the unvulcanized rubber G had high viscosity.

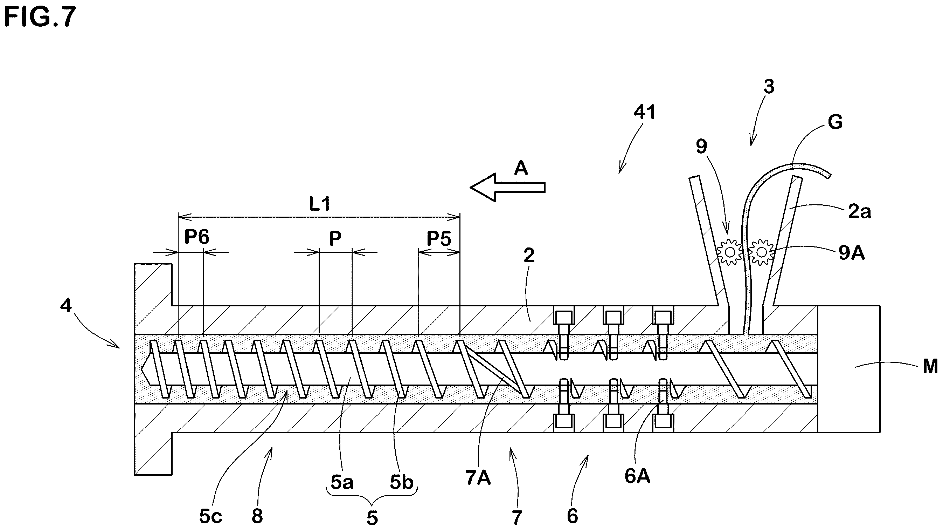

FIG. 7 illustrates a cross-sectional view of the rubber extruder 41 according to the fifth embodiment, which is not claimed. Note that the same or common elements as the above embodiment are denoted the same references and omitted the detail explanation thereof. As illustrated in FIG. 7, the rubber extruder 41 according to the fifth embodiment, the same as the rubber extruder 1 and the like, includes the barrel 2, the feeding portion 3, the discharging portion 4, and the screw 5. In addition, the interior of the barrel 2 is preferably provided with the dividing section 6, the kneading section 7, and the compression section 8. The screw 5 according to this embodiment, for example, has the screw shaft 5a having a constant diameter or a substantially constant diameter over the whole length of the screw 5.

In this embodiment, the feeder 9 of the feeding portion 3 includes the gear mechanism 9A includes as an example, but the feeder 9, for example, may include at least one of the wide flight pitch portion 9B and the low flight height portion 9C. In this embodiment, the dividing section 6 includes the sets of pins 6A which are arranged in the extruding direction at the same arrangement pitch or substantially same pitch as with one another, but the dividing section 6, for example, may include the sets of pins 6A which are arranged in the extruding direction at different pitch from one another. Further, the kneading section 7 according to this embodiment includes the barrier flight 7A as an example, but the kneading section 7, for example, may include the dam portion 7B.

The compression section 8 according to this embodiment, for example, is configured such that the screw 5 in the compression section 8 has varying flight pitch P in the axial direction decreasing toward the extruding direction A of the unvulcanized rubber G In the compression section 8, the screw preferably has a ratio (P5-P6)/L1 of from 3% to 8%, where "P5" represents a flight pitch at the starting position of the compression section 8, "P6" represents a flight pitch at the ending position of the compression section 8, and "L1" represents an axial length of the compression section 8. Such a compression section 8 can compress unvulcanized rubber G such that a rate of increase of pressure of the unvulcanized rubber G per unit time becomes small, merging the unvulcanized rubber G without increasing residual stress thereof.

The method for extruding rubber using the rubber extruder 41 according to the fifth embodiment is the same as the flowcharts as shown in FIG. 2 and FIG. 3. That is, the method for extruding rubber according to this embodiment includes the feeding step S1, the extruding step S2, and the discharging step S3. Preferably, the extruding step S2 includes the dividing step S21, the kneading step S22, and the compressing step S23.

The compressing step S23 according to this embodiment, for example, compresses the unvulcanized rubber G using the screw 5 having varying flight pitch P in the axial direction decreasing gradually toward the extruding direction A of the unvulcanized rubber G Such a compressing step S23 can compress unvulcanized rubber G such that a rate of increase of pressure of the unvulcanized rubber G per unit time becomes small, compressing the unvulcanized rubber G without increasing residual stress thereof.

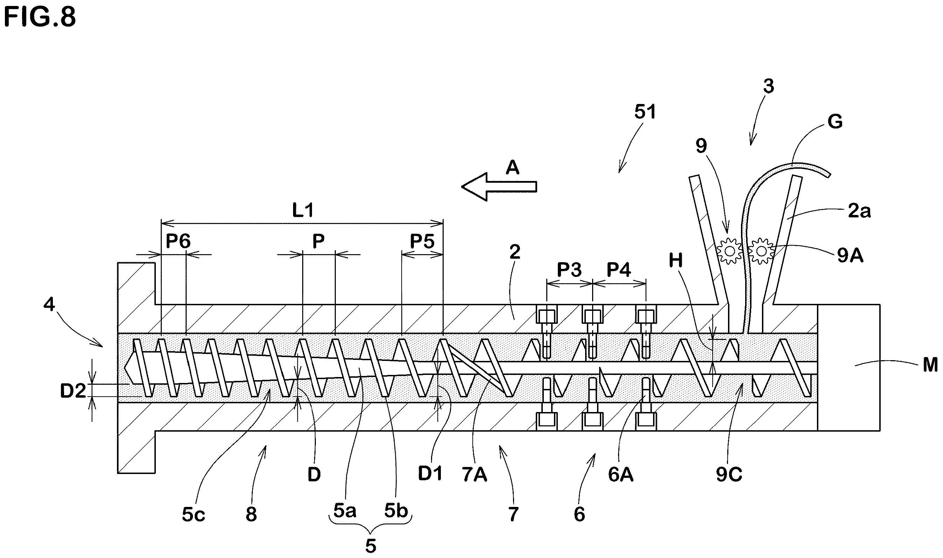

FIG. 8 illustrates a cross-sectional view of the rubber extruder 51 according to the sixth embodiment, which is according to the present invention. Note that the same or common elements as the above embodiment are denoted the same references and omitted the detail explanation thereof. As illustrated in FIG. 8, the rubber extruder 51 according to the sixth embodiment, the same as the rubber extruder 1 and the like, includes the barrel 2, the feeding portion 3, the discharging portion 4, and the screw 5. In addition, the interior of the barrel 2 is preferably provided with the dividing section 6, the kneading section 7, and the compression section 8.

The feeder 9 according to this embodiment includes the gear mechanism 9A and the low flight height portion 9C, but the feeder 9, for example, may include at least one means as described above. The dividing section 6 according to this embodiment includes the sets of pins 6A which are arranged in the axial direction of the barrel 2 such that the pitch P3 of the kneading section 7 side is smaller than the pitch P4 of the feeding portion 3 side. Alternatively, the dividing section 6, for example, may include the sets of pins 6A which are arranged in the axial direction at a regular pitch or substantially regular pitch. In addition, as an example, the kneading section 7 according to this embodiment includes the barrier flight 7A, but the kneading section 7, for example, may include the dam portion 7B.

In the compression section 8 according to this embodiment, the screw 5 is configured such that a depth D of the channel 5c as well as the flight pitch P of the screw 5 decreases gradually toward the extruding direction A of the unvulcanized rubber G Such a compression section 8 can make increase pressure of the unvulcanized rubber G appropriately, merging the unvulcanized rubber G effectively.

The method for extruding rubber using the rubber extruder 51 according to the sixth embodiment is the same as the flowcharts as shown in FIG. 2 and FIG. 3. That is, the method includes the feeding step S1, the extruding step S2, and the discharging step S3. The extruding step S2 preferably includes the dividing step S21, the kneading step S22, and the compressing step S23.

The compressing step S23 according to this embodiment, for example, compresses the unvulcanized rubber G using the screw 5 configured such that a depth D of the channel 5c as well as the flight pitch P of the screw 5 decreases gradually toward the extruding direction A of the unvulcanized rubber G Such a compressing step S23 can make increase pressure of the unvulcanized rubber G appropriately, merging the unvulcanized rubber G effectively.

While the particularly preferred embodiments in accordance with the disclosure have been described in detail above, the present disclosure is not limited to the above embodiments but can be modified and carried out in various aspects within the scope of the disclosure.

### [Examples]

Using the rubber extruders shown in FIG. 1, and FIG. 4 to FIG. 8, tests for extruding unvulcanized rubber were conducted in accordance with the methods as shown in FIG. 2 and FIG. 3 (Examples). As to comparative examples, using a rubber extruder that is not provided with the feeder, the dividing section nor the compression section, a test for extruding unvulcanized rubber was also conducted in accordance with a conventional rubber extruding method. In each test, four kinds of unvulcanized rubber having Mooney viscosity ML (1+4) @100 degrees C. of 80, 95, 110, and 130 were extruded, and then quality and productivity of the extruded unvulcanized rubber was evaluated. As to the rubber extruders with vent portions, vulcanized rubber was extruded without sucking up gasses by the vent portions. The evaluation methods are as follows.

### Quality:

Quality of extruded unvulcanized rubber was evaluated comprehensively based on surface roughness and residual stress of the respective extruded unvulcanized rubber. The results are shown in Table 1 using a four-grade evaluation of one to four, wherein the grades indicate that the smaller is better.
1: the best
2: better
3: normal
4: bad

### Productivity:

Each rubber extruder was driven at a number of rotations capable of maintaining the standard or higher in quality of extruded unvulcanized rubber for one hour including suspended time of the rubber extruder due to error of feeding, and then a quantity of the discharging rubber was measured. The results are shown in Table 1 using a four-grade evaluation of one to four, wherein the grades indicate that the smaller is better.
1: very large quantity
2: large quantity
3: normal
4: small quantity

The test results are shown in Table 1.

**[Table 1]**

| | Ref. | Ex. 1 | Ex. 2 | Ex. 3 | Ex. 4 | Ex. 5 | Ex. 6 |
|---|---|---|---|---|---|---|---|
| Rubber extruder | screw with barrier flight | FIG. 1 | FIG. 4 | FIG. 5 | FIG. 6 | FIG. 7 | FIG. 8 |
| Quality of unvulcanized rubber having Mooney viscosity of 80 | 2 | 1 | 1 | 1 | 1 | 1 | 1 |
| Productivity of unvulcanized rubber having Mooney viscosity of 80 | 2 | 1 | 2 | 2 | 1 | 2 | 2 |
| Quality of unvulcanized rubber having Mooney viscosity of 95 | 3 | 1 | 1 | 1 | 1 | 1 | 2 |
| Productivity of unvulcanized rubber having Mooney viscosity of 95 | 3 | 2 | 3 | 3 | 2 | 2 | 2 |
| Quality of unvulcanized rubber having Mooney viscosity of 110 | 4 | 2 | 2 | 2 | 2 | 2 | 2 |
| Productivity of unvulcanized rubber having Mooney viscosity of 110 | 4 | 2 | 2 | 2 | 2 | 2 | 2 |
| Quality of unvulcanized rubber having Mooney viscosity of 130 | 4 | 2 | 2 | 2 | 2 | 2 | 2 |
| Productivity of unvulcanized rubber having Mooney viscosity of 130 | 4 | 2 | 3 | 3 | 2 | 2 | 3 |

From the test results, it is confirmed that the rubber extruders and extruding methods of examples, as compared to the comparative example (Ref.), extrude unvulcanized rubber in better quality with large quantity. In particular, it is also confirmed that the extruders and methods of examples improve both quality and productivity upon extruding high viscosity unvulcanized rubber.

### [Reference Signs List]

- 1: rubber extruder
- 2: barrel
- 3: feeding portion
- 5: screw
- 6: dividing section
- 6A: pin
- 7: kneading section
- 8: compression section

## Claims

1. A rubber extruder (1) comprising:
a barrel (2);
a feeding portion (3) for feeding unvulcanized rubber (G) to the interior of the barrel (2); and
a screw (5) for extruding the unvulcanized rubber (G) fed in the interior of the barrel (2) toward an extruding direction (A), the screw (5) having at least one helically extending flight (5b) to define at least one helically extending channel (5c); wherein
the interior of the barrel (2) comprises a dividing section (6) for dividing the unvulcanized rubber (G), a kneading section (7) for kneading the divided unvulcanized rubber (G)locally, and a compression section (8) for compressing the kneaded unvulcanized rubber (G) toward the extruding direction (A), wherein
the compression section (8) is configured such that the screw (5) therein has a volume of the channel (5c) decreasing gradually toward the extruding direction (A) of the unvulcanized rubber (G) and
the feeding portion (3) comprises a feeder (9) for helping to supply the screw (5) with the unvulcanized rubber (G),
**characterized in that**
the feeder (9) comprises a low flight height portion (9C) of the screw (5) having a flight height smaller than that of another portion of the screw (5).

2. The rubber extruder (1) according to claim 1, wherein
a length (L1) of the compression section (8) in an axial direction of the barrel (2) is longer than a length (L2) of the dividing section (6) in the axial direction.

3. The rubber extruder (1) according to claim 1 or 2, wherein
in the dividing section (6), the barrel (2) is provided with one or more sets of plurality of pins (6A).

4. The rubber extruder (1) according to claim 3, wherein
three or more sets of plurality of pins (6A) are arranged in the axial direction of the barrel (2), and
with respect to arrangement pitches in the axial direction of the sets of plurality of pins (6A), a pitch (P3) on the kneading section (7) side is smaller than a pitch (P4) on the feeding portion (3) side.

5. The rubber extruder (1) according to any one of claims 1 to 4, wherein
the feeding portion (3) comprises a hopper (2a) provided on the barrel (2), and
the feeder (9) comprises a gear mechanism (9A) disposed in the hopper (2a).

6. The rubber extruder (1) according to any one of claims 1 to 5, wherein
the feeder (9) comprises a wide flight pitch portion (9B) of the screw (5) having a flight pitch greater than that of another portion of the screw (5).

7. The rubber extruder (1) according to any one of claims 1 to 6, wherein
the compression section (8) is configured such that a depth (D) of the channel (5c) of the screw (5) decreases gradually toward the extruding direction (A).

8. The rubber extruder (1) according to any one of claims 1 to 7, wherein
the compression section (8) is configured such that a flight pitch of the screw (8) in the axial direction decreases gradually toward the extruding direction (A).

9. The rubber extruder (1) according to any one of claims 1 to 8,
the screw (5) in the kneading section (7) further comprising a barrier flight (7A) extending from a portion of the flight (5b) to another portion of the flight (5b).

10. The rubber extruder (1) according to any one of claims 1 to 9,
the screw (5) in the kneading section (7) further comprising a cylindrical dam portion (7B) arranged coaxially with the screw (5).

11. A method for extruding rubber, the method comprising:
a feeding step for feeding an interior of a barrel (2) of a rubber extruder (1) with unvulcanized rubber (G); and
an extruding step for extruding the unvulcanized rubber (G) fed in the barrel (2) toward an extruding direction (A) using a screw (5) which comprises at least one helically extending flight (5b) to define at least one helically extending channel (5c); wherein
the extruding step comprises
a dividing step for dividing the unvulcanized rubber (G),
a kneading step for kneading the divided unvulcanized rubber (G) locally, and
a compressing step for compressing the kneaded unvulcanized rubber (G) toward the extruding direction (A), wherein
the compressing step compresses the unvulcanized rubber (G) using the screw (5) configured such that the screw (5) has a volume of the channel (5c) decreasing gradually toward the extruding direction (A),
wherein the feeding step feeds the unvulcanized rubber (G) using a feeder (9) of the rubber extruder (1), wherein the feeder (9) comprises a low flight height portion (9C) of the screw (5) having a flight height smaller than that of another portion of the screw (5).

12. The method for extruding rubber according to claim 11, wherein
the dividing step divides the unvulcanized rubber (G) using one or more sets of plurality of pins (6A) provided on the interior of the barrel (2).

## Patentansprüche

1. Kautschukextruder (1), umfassend:
einen Zylinder (2);
einen Zuführungsteil (3) zum Zuführen von unvulkanisiertem Kautschuk (G) in das Innere des Zylinders (2); und
eine Schnecke (5) zum Extrudieren des unvulkanisierten Kautschuks (G), der im Inneren des Zylinders (2) zugeführt wird, zu einer Extrusionsrichtung (A) hin, wobei die Schnecke (5) mindestens einen sich schraubenförmig erstreckenden Gang (5b) aufweist, um mindestens einen sich schraubenförmig erstreckenden Kanal (5c) zu definieren; wobei
das Innere des Zylinders (2) einen Teilungsabschnitt (6) zum Teilen des unvulkanisierten Kautschuks (G), einen Knetabschnitt (7) zum lokalen Kneten des geteilten unvulkanisierten Kautschuks (G) und einen Kompressionsabschnitt (8) zum Komprimieren des gekneteten unvulkanisierten Kautschuks (G) zur Extrusionsrichtung (A) hin umfasst, wobei
der Kompressionsabschnitt (8) so konfiguriert ist, dass die Schnecke (5) darin ein Volumen des Kanals (5c) aufweist, das allmählich zur Extrusionsrichtung (A) des unvulkanisierten Kautschuks (G) hin abnimmt,
wobei der Zuführungsteil (3) eine Zuführungsvorrichtung (9) umfasst, die unterstützt, die Schnecke (5) mit dem unvulkanisierten Kautschuk (G) zu versorgen.
**dadurch gekennzeichnet, dass**
die Zuführungsvorrichtung (9) einen Teil (9C) der Schnecke (5) mit geringer Ganghöhe umfasst, der eine geringere Ganghöhe als ein anderer Teil der Schnecke (5) aufweist.

2. Kautschukextruder (1) nach Anspruch 1, wobei eine Länge (L1) des Kompressionsabschnitts (8) in einer axialen Richtung des Zylinders (2) länger als eine Länge (L2) des Teilungsabschnitts (6) in der axialen Richtung ist.

3. Kautschukextruder (1) nach Anspruch 1 oder 2, wobei der Zylinder (2) in dem Teilungsabschnitt (6) mit einem oder mehreren Sätzen einer Vielzahl von Stiften (6A) versehen ist.

4. Kautschukextruder (1) nach Anspruch 3, wobei
drei oder mehr Sätze einer Vielzahl von Stiften (6A) in der axialen Richtung des Zylinders (2) angeordnet sind, und
in Bezug auf Anordnungsabstände in der axialen Richtung der Sätze einer Vielzahl von Stiften (6A) ein Abstand (P3) auf der Seite des Knetabschnitts (7) kleiner als ein Abstand (P4) auf der Seite des Zuführungsteils (3) ist.

5. Kautschukextruder (1) nach einem der Ansprüche 1 bis 4, wobei
der Zuführungsteil (3) einen Trichter (2a) umfasst, der auf dem Zylinder (2) vorgesehen ist, und
die Zuführungsvorrichtung (9) einen in dem Trichter (2a) angeordneten Zahnradmechanismus (9A) umfasst.

6. Kautschukextruder (1) nach einem der Ansprüche 1 bis 5, wobei die Zuführungsvorrichtung (9) einen Teil (9B) der Schnecke (5) mit großer Gangsteigung umfasst, dessen Gangsteigung größer als die eines anderen Teils der Schnecke (5) ist.

7. Kautschukextruder (1) nach einem der Ansprüche 1 bis 6, wobei der Kompressionsabschnitt (8) so konfiguriert ist, dass eine Tiefe (D) des Kanals (5c) der Schnecke (5) zur Extrusionsrichtung (A) hin allmählich abnimmt.

8. Kautschukextruder (1) nach einem der Ansprüche 1 bis 7, wobei der Kompressionsabschnitt (8) so konfiguriert ist, dass eine Gangsteigung der Schnecke (8) in der axialen Richtung allmählich zur Extrusionsrichtung (A) hin abnimmt.

9. Kautschukextruder (1) nach einem der Ansprüche 1 bis 8, wobei die Schnecke (5) in dem Knetabschnitt (7) außerdem eine Sperrgang (7A) umfasst, der sich von einem Teil des Gangs (5b) zu einem anderen Teil des Gangs (5b) erstreckt.

10. Kautschukextruder (1) nach einem der Ansprüche 1 bis 9, wobei die Schnecke (5) in dem Knetabschnitt (7) außerdem einen zylindrischen Dammteil (7B) umfasst, der koaxial zur Schnecke (5) angeordnet ist.

11. Verfahren zum Extrudieren von Kautschuk, wobei das Verfahren umfasst:
einen Zuführungsschritt zum Zuführen unvulkanisiertem Kautschuks (G) in ein Inneres eines Zylinders (2) eines Kautschukextruders (1); und
einen Extrusionsschritt zum Extrudieren des unvulkanisierten Kautschuks (G), der in dem Zylinder (2) zugeführt wird, zu einer Extrusionsrichtung (A) hin unter Verwendung einer Schnecke (5), die mindestens einen sich schraubenförmig erstreckenden Gang (5b) aufweist, um mindestens einen sich schraubenförmig erstreckenden Kanal (5c) zu definieren; wobei
der Extrusionsschritt umfasst
einen Teilungsschritt zum Teilen des unvulkanisierten Kautschuks (G),
einen Knetschritt zum lokalen Kneten des geteilten unvulkanisierten Kautschuks (G), und
einen Kompressionsschritt zum Komprimieren des gekneteten unvulkanisierten Kautschuks (G) zur Extrusionsrichtung (A) hin, wobei
der Kompressionsschritt den unvulkanisierten Kautschuk (G) unter Verwendung der Schnecke (5) komprimiert, die so konfiguriert ist, dass die Schnecke (5) ein Volumen des Kanals (5c) aufweist, das allmählich zur Extrusionsrichtung (A) hin abnimmt,
wobei der Zuführungsschritt den unvulkanisierten Kautschuk (G) unter Verwendung einer Zuführungsvorrichtung (9) des Kautschukextruders (1) zuführt, wobei die Zuführungsvorrichtung (9) einen Teil (9C) der Schnecke (5) mit geringer Ganghöhe umfasst, der eine geringere Ganghöhe als ein anderer Teil der Schnecke (5) aufweist.

12. Verfahren zum Extrudieren von Kautschuk nach Anspruch 11, wobei der Teilungsschritt den unvulkanisierten Kautschuk (G) unter Verwendung eines oder mehrerer Sätze einer Vielzahl von Stiften (6A), die im Inneren des Zylinders (2) vorgesehen sind, teilt.

## Revendications

1. Extrudeuse à caoutchouc (1) comprenant :
un cylindre (2) ;
une portion d'alimentation (3) destinée à alimenter un caoutchouc non vulcanisé (G) jusque dans l'intérieur du cylindre (2) ; et
une vis (5) destinée à extruder le caoutchouc non vulcanisé (G) alimenté dans l'intérieur du cylindre (2) vers une direction d'extrusion (A), la vis (5) ayant au moins un filet (5b) s'étendant de manière hélicoïdale pour définir au moins un canal (5c) s'étendant de manière hélicoïdale ; dans laquelle
l'intérieur du cylindre (2) comprend une section de division (6) destinée à diviser le caoutchouc non vulcanisé (G), une section de pétrissage (7) destinée à pétrir localement le caoutchouc non vulcanisé (G) divisé, et une section de compression (8) destinée à comprimer le caoutchouc non vulcanisé (G) pétri vers la direction d'extrusion (A), dans laquelle
la section de compression (8) est configurée de telle sorte que la vis (5) à l'intérieur de celle-ci a un volume du canal (5c) qui diminue graduellement vers la direction d'extrusion (A) du caoutchouc non vulcanisé (G), et
la portion d'alimentation (3) comprend un alimentateur (9) destiné à aider à alimenter la vis (5) avec le caoutchouc non vulcanisé (G),
**caractérisée en ce que**
l'alimentateur (9) comprend une portion à hauteur de filet basse (9C) de la vis (5) ayant une hauteur de filet plus petite que celle d'une autre portion de la vis (5).

2. Extrudeuse à caoutchouc (1) selon la revendication 1, dans laquelle une longueur (L1) de la section de compression (8) dans une direction axiale du cylindre (2) est plus longue qu'une longueur (L2) de la section de division (6) dans la direction axiale.

3. Extrudeuse à caoutchouc (1) selon la revendication 1 ou 2, dans laquelle dans la section de division (6), le cylindre (2) est doté d'un ou de plusieurs ensembles d'une pluralité de broches (6A).

4. Extrudeuse à caoutchouc (1) selon la revendication 3, dans laquelle
trois ou plusieurs ensembles d'une pluralité de broches (6A) sont agencés dans la direction axiale du cylindre (2), et
par rapport à des pas d'agencement dans la direction axiale des ensembles d'une pluralité de broches (6A), un pas (P3) sur le côté de la section de pétrissage (7) est plus petit qu'un pas (P4) sur le côté de la portion d'alimentation (3).

5. Extrudeuse à caoutchouc (1) selon l'une quelconque des revendications 1 à 4, dans laquelle
la portion d'alimentation (3) comprend une trémie (2a) prévue sur le cylindre (2), et
l'alimentateur (9) comprend un mécanisme à engrenage (9A) disposé dans la trémie (2a).

6. Extrudeuse à caoutchouc (1) selon l'une quelconque des revendications 1 à 5, dans laquelle
l'alimentateur (9) comprend une portion de pas de filet large (9B) de la vis (5) ayant un pas de filet plus grand que celui d'une autre portion de la vis (5).

7. Extrudeuse à caoutchouc (1) selon l'une quelconque des revendications 1 à 6, dans laquelle
la section de compression (8) est configurée de telle sorte qu'une profondeur (D) du canal (5c) de la vis (5) diminue graduellement vers la direction d'extrusion (A).

8. Extrudeuse à caoutchouc (1) selon l'une quelconque des revendications 1 à 7, dans laquelle
la section de compression (8) est configurée de telle sorte qu'un pas de filet de la vis (5) dans la direction axiale diminue graduellement vers la direction d'extrusion (A).

9. Extrudeuse à caoutchouc (1) selon l'une quelconque des revendications 1 à 8, dans laquelle
la vis (5) dans la section de pétrissage (7) comprend en outre un filet barrière (7A) s'étendant depuis une portion du filet (5b) jusqu'une autre portion du filet (5b).

10. Extrudeuse à caoutchouc (1) selon l'une quelconque des revendications 1 à 9, dans laquelle
la vis (5) dans la section de pétrissage (7) comprend en outre une portion de barrage cylindrique (7B) agencée de manière coaxiale par rapport à la vis (5).

11. Procédé d'extrusion de caoutchouc, le procédé comprenant :
une étape d'alimentation destinée à alimenter un intérieur d'un cylindre (2) d'une extrudeuse à caoutchouc (1) avec un caoutchouc non vulcanisé (G) ; et
une étape d'extrusion destinée à extruder le caoutchouc non vulcanisé (G) alimenté dans le cylindre (2) vers une direction d'extrusion (A) en utilisant une vis (5) qui comprend au moins un filet (5b) s'étendant de manière hélicoïdale pour définir au moins un canal (5c) s'étendant de manière hélicoïdale ; dans lequel
l'étape d'extrusion comprend
une étape de division destinée à diviser le caoutchouc non vulcanisé (G),
une étape de pétrissage destinée à pétrir localement le caoutchouc non vulcanisé (G) divisé, et
une étape de compression destinée à comprimer le caoutchouc non vulcanisé (G) pétri vers la direction d'extrusion (A), dans lequel
l'étape de compression comprime le caoutchouc non vulcanisé (G) en utilisant la vis (5) configurée de telle sorte que la vis (5) a un volume du canal (5c) qui diminue graduellement vers la direction d'extrusion (A),
dans lequel l'étape d'alimentation alimente le caoutchouc non vulcanisé (G) en utilisant un alimentateur (9) de l'extrudeuse à caoutchouc (1), l'alimentateur (9) comprenant une portion à hauteur de filet basse (9C) de la vis (5) ayant une hauteur de filet plus petite que celle d'une autre portion de la vis (5).

12. Procédé d'extrusion de caoutchouc selon la revendication 11, dans lequel
l'étape de division divise le caoutchouc non vulcanisé (G) en utilisant un ou plusieurs ensembles d'une pluralité de broches (6A) prévues sur l'intérieur du cylindre (2).
